# EUROPEAN PATENT SPECIFICATION

(11) **EP 0 899 372 B1**
(45) Date of publication and mention of the grant of the patent: **26.04.2006**
(21) Application number: 98650056.9
(22) Date of filing: 26.08.1998
(51) Int. Cl.: D06N 3/00, D06N 3/06, D06N 7/00, B29C 43/22

(54) **A method for manufacturing a floor covering**
Verfahren zur Herstellung eines Bodenbelags
Procédé de fabrication d'un revêtement de sol

(30) Priority: 27.08.1997 IE 970633
(43) Date of publication of application: 03.03.1999
(73) Proprietor: Tarkett Ireland Limited, Mullingar, Co. Westmeath (IE)
(72) Inventor: Hinds, Terence Martin, Maynooth, County Kildare (IE); Geraghty, John Joseph, Celbridge, County Kildare (IE); Basler Rolf, County Westmeath (IE)
(74) Representative: O'Brien, John Augustine

(56) References cited:
- EP-A- 0 226 946
- EP-A- 0 597 559
- DE-A- 4 240 025
- US-A- 3 700 366
- US-A- 4 396 566
- US-A- 4 778 547

## Description

### Introduction

The invention relates to a method for manufacturing a floor covering and in particular to a method for manufacturing a polymeric, for example, a vinyl floor covering.

In conventional manufacturing processes for cushion vinyl floor covering, a glassmat tissue or mineral felt is used as the base carrier material. In a first step in the process, the glassmat tissue is saturated with a PVC plastisol material which is applied to the mat using a knife and/or application roller. The plastisol is then gelled on a hot chrome plated drum to provide a smooth solid surface.

A basecoat in the form of a foamable plastisol is applied using a knife or roller to a coating thickness of typically 300 g/m². This basecoat is also gelled on a hot gel drum to produce a smooth surface which is suitable for printing. A design is then printed on the gelled basecoat, typically using a rotogravure method in which a design/coloration is printed using a sequence of printing cylinders. To provide an embossed finish, one or more of the cylinders applies an inhibitor in a desired pattern. The inhibitor inhibits foam expansion.

A topcoating in the form of a clear PVC plastisol is then coated on top of the print layer and the topcoating is gelled on a hot gel drum. The layered product thus formed is then heated in an oven at typically 190°C which causes the basecoat foam layer to expand in all areas except where the inhibitor has been applied. The PVC plastisol also fuses at this temperature to give a clear hard resilient surface finish.

A backing layer in the form of a PVC plastisol is coated onto the product. The backing may be of a foamable material. If desired, the surface of the floor covering thus formed may be toughened by applying a crosslinkable polyurethane or acrylic lacquer.

There are a number of problems with such manufacturing techniques. In particular, there is an ever increasing need to minimise production and raw material costs, to minimise use of environmentally unfriendly material while optimising product quality.

US-A-4396566 describes a process for the manufacture of a covering sheet from thermoplastics resin by applying thermoplastic resin in particulate form on a belt. preheating and then applying high pressure to the material whilst heating.

There is therefore a need for an improved cost effective method for producing floor covering.

### Statements of Invention

According to the invention, there is provided a method for manufacturing a floor covering comprising the steps of:-
scattering powder, granules or pellets of a thermoplastic material onto a first substrate to form a first coating;
leading the thus coated substrate between a pair of belts of a low pressure double belt press:
   applying heat to gel the coating between the belts:
      smoothing the gelled coating between a pair of nipping rollers which define a gap therebetween to provide a layer of desired thickness: and
      cooling the layer.

In a particularly preferred embodiment of the invention, the substrate is a fibre matt material, especially a glass fibre matt material. Preferably, the fibre malt has less than 100 g, ideally less than 65 g and most preferably from 30 to 50 g of glass fibre per m² of material. This material is easily handled in roll form and provides the required reinforcing strength.

Preferably the method includes the step of adjusting the gap between the nip rollers. In this way the process is readily tailored to a desired final product.

In one embodiment of the invention the method comprises the steps of:
scattering powder, granules or pellets of thermoplastic material onto a first substrate to form a first coating:
   applying a second substrate over the first coating;
   scattering powder, granules or pellets of a thermoplastic material onto the second substrate to form a second coating;
   leading the thus coated substrate between a pair of belts of a low pressure double belt press;
   applying heat to gel the coatings between the belts;
   smoothing the gelled coatings between a pair of nipping rollers which define a gap there between to provide a layered product of desired thickness: and
   cooling the layered product.

In one case the first substrate is defined by a lower of the belts. Alternatively or additionally the second substrate is a fibre matt substrate as defined above.

For some applications the first and second coatings may be the same. For example, the coatings may be of a saturation material to provide a highly efficient saturation layer in which the substrate matt is impregnated from both sides.

Alternatively, the coatings may be of a different material. For example, the first coating may be of a saturation material and the second coating may be of a basecoat material. The advantage of such an arrangement is that two layers may be formed in one pass through the heating section.

In both cases, if required, the or each coating may be pre-heated by means of an infra red heater or the like.

The material may be scattered to form, on heating, a basecoat layer. The basecoat is preferably a foamable layer, typically formed using a blowing agent mix of azodicarbonamide and zinc oxide.

Preferably, the basecoat is formed by a method including the steps of:-
scattering a foamable basecoat-forming material onto the saturation layer of the substrate;
leading the substrate between a pair of belts; and
applying heat to the belts to form a basecoat layer on the saturation layer.

In one embodiment of the invention, a substrate is defined by one of especially the lower of the belts.

Preferably, the method includes the steps of:-
scattering a first thermoplastics material onto a first belt;
applying a substrate over the first thermoplastics material;
scattering a second thermoplastics material onto the substrate;
leading the substrate with the first and second thermoplastics materials under a second belt; and
applying heat to the belts to gel the thermoplastics material to form a backing layer on one face of the substrate and a saturation or basecoat layer on the other face of the substrate.

In one embodiment of the invention, the second layer is a saturation layer and the method includes the steps of:-
scattering a third thermoplastics material over the saturation layer;
leading the substrate between a pair of belts; and
applying heat to the belts to gel the third thermoplastics material to form a basecoat layer on the saturation layer.

Preferably, after heating, the substrate is led over a smoothing roller prior to cooling. Ideally, one of the belts as it is led over the smoothing roller.

In one embodiment of the invention, the method includes the step of heating and/or cooling the substrate as it is led over the smoothing roller.

Preferably, the substrate is heated or cooled by heating or cooling the smoothing roller.

In a preferred arrangement, the substrate is led over an infeed roller to the smoothing roller. Preferably, the substrate is led over an outfeed roller from the smoothing roller.

In one embodiment of the invention, the substrate is heated or cooled as it is led over the infeed and/or outfeed rollers.

Preferably, the substrate is cooled after gelling by leading the pair of belts through a cooling station.

In another embodiment of the invention, the substrate is a mineral felt. In this case, a saturation layer is typically not required and a basecoat material is applied directly to the substrate.

In this specification basecoat layer refers to the layer which is subsequently printed. The basecoat is preferably of a foamable material.

The invention also provides a floor covering whenever manufactured by the method of the invention.

### Brief Description of the Drawings

The invention will be more clearly understood from the following description thereof, given by way of example only, with reference to the accompanying drawings, in which:-
Fig. 1 is a diagrammatic side elevational view of apparatus used in the method of the invention.
Fig. 2 is a diagrammatic side elevational view of an apparatus of Fig. 1 used in a method for manufacturing a floor covering according to the invention in one arrangement of use;
Figs. 3 to 5 are cross sectional views of a layered floor covering product at various stages in the method of Fig. 2;
Fig. 6 is a diagrammatic side elevational view of the apparatus of Fig. 1 in another arrangement of use;
Figs. 7 to 9 are cross sectional views of a layered floor covering product at various stages in the method of Fig. 6;
Fig.10 is a perspective view of part of the apparatus of Fig. 1;

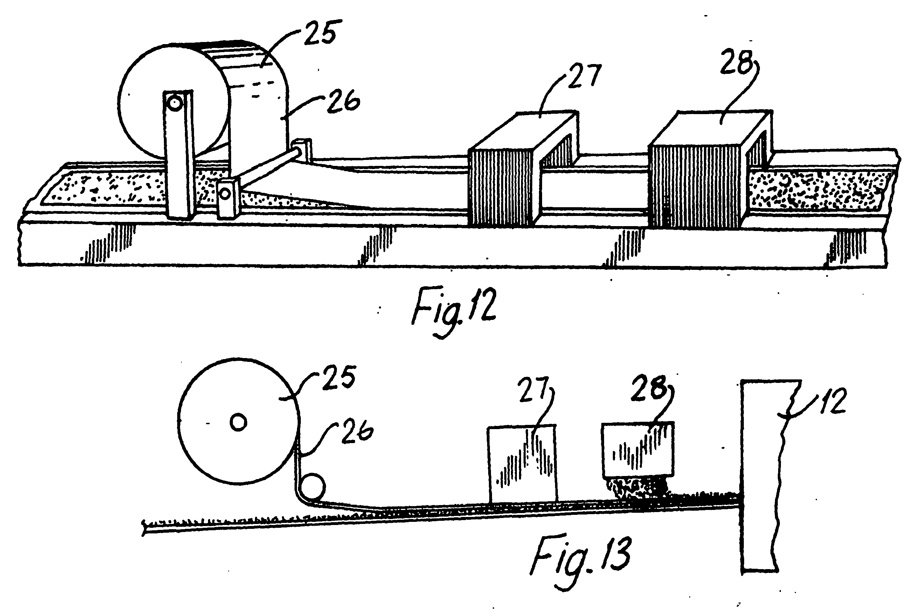

Fig. 11 is a side elevational view of the apparatus of Fig. 10;
Fig. 12 is a perspective view of another part of the apparatus of Fig. 1;
Fig. 13 is a side elevational view of the apparatus of Fig. 12;
Fig. 14 is a perspective view of a smoothing roller part of an alternative apparatus; and
Fig. 15 is a plan view of the apparatus of Fig. 14.

### Detailed Description

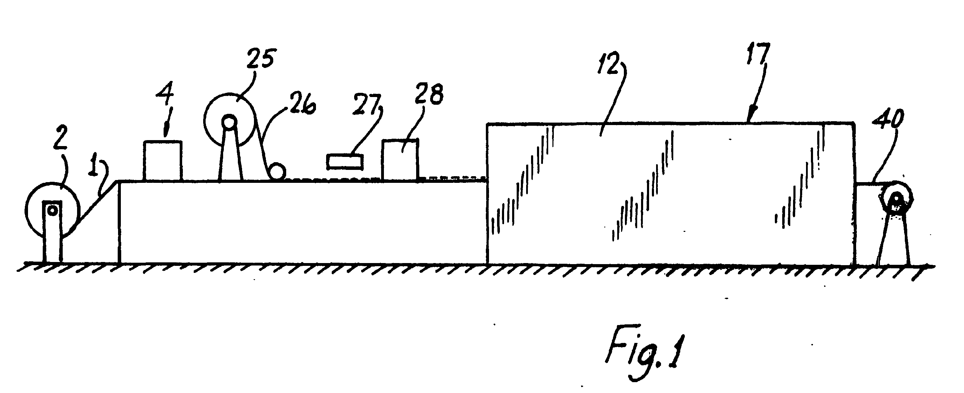

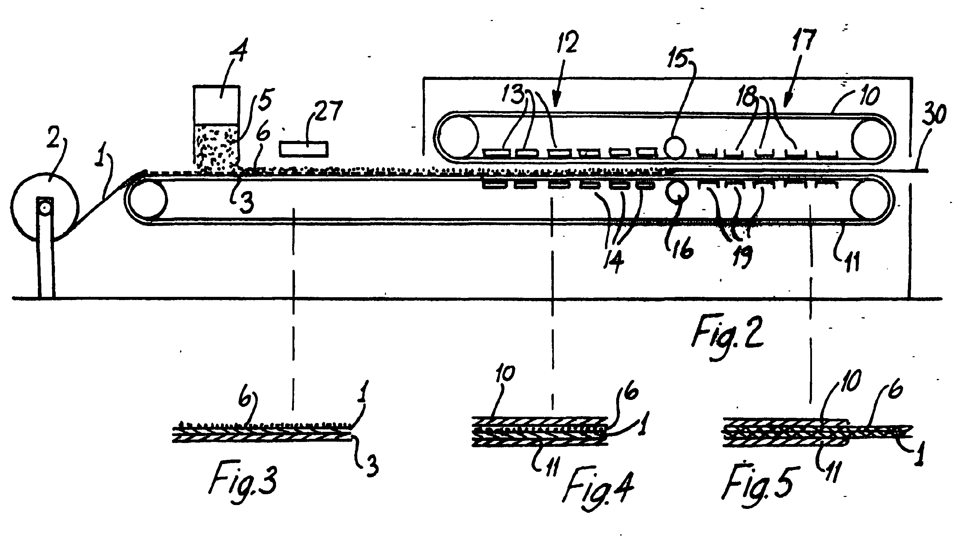

Referring to Figs. 1 and 2 of the drawings, there is illustrated an apparatus used in a method for manufacturing a floor covering according to the invention. A substrate 1, in this case in the form of a glass fibre matt material having 30 to 50 g/m² of glass fibre material is led from a supply reel 2 onto a lower conveyor belt 3. At a first scattering station 4, a material is scattered in a curtain 5 onto the glass fibre matt substrate 1 to form a scattered layer 6.

The fibre matt substrate 1 with the scattered layer may then be passed without any further layers being applied between an upper belt 10 and a lower belt 11 of a thermofixing oven unit 12. The belt 11 forms a continuation of the belt 3. The oven unit 12 is a heated low pressure double belt press which applies heat to the scattered layer 6 and glass fibre matt 1 to bind the non woven glass matt to the scattered layer 6. In this case the oven unit comprises a number of upper and lower sections 13, 14. The operating temperature of each section or groups of sections 13, 14 may be varied.

After heating, the substrate supported between the upper and lower belts 10, 11 is led between a pair of nipping rollers 15, 16 to smooth the gelled coating to provide a layer of desired thickness.

The gelled layered substrate is then cooled between the pair of belts at a cooling station 17. The cooling station 17 comprises a plurality of top and bottom cooling sections 18, 19, the operating temperature of which may be adjusted in groups or individually. The layered substrate 30 may then be wound onto a take-up reel 40.

Further layers may be scattered onto the gelled substrate by leading the substrate through the apparatus again as described above or through another similar apparatus arranged in series.

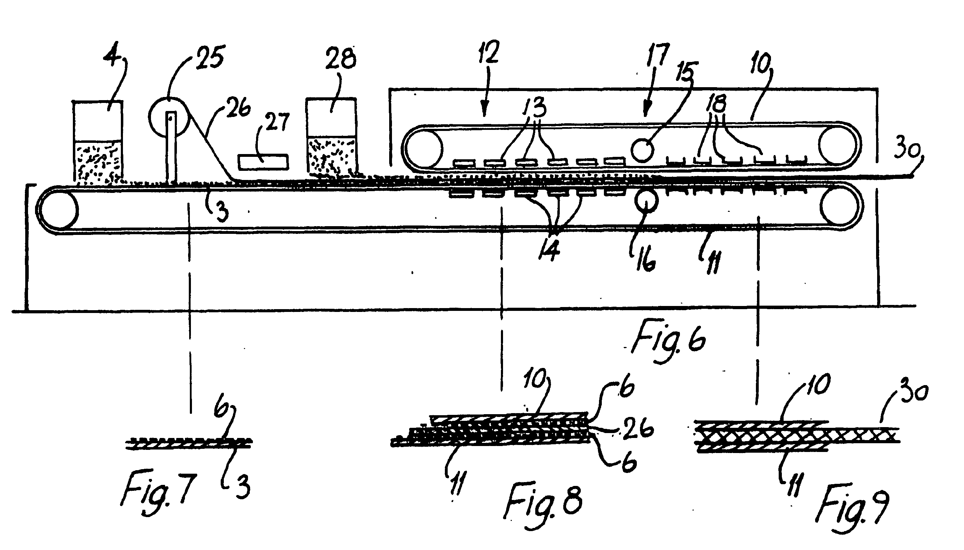

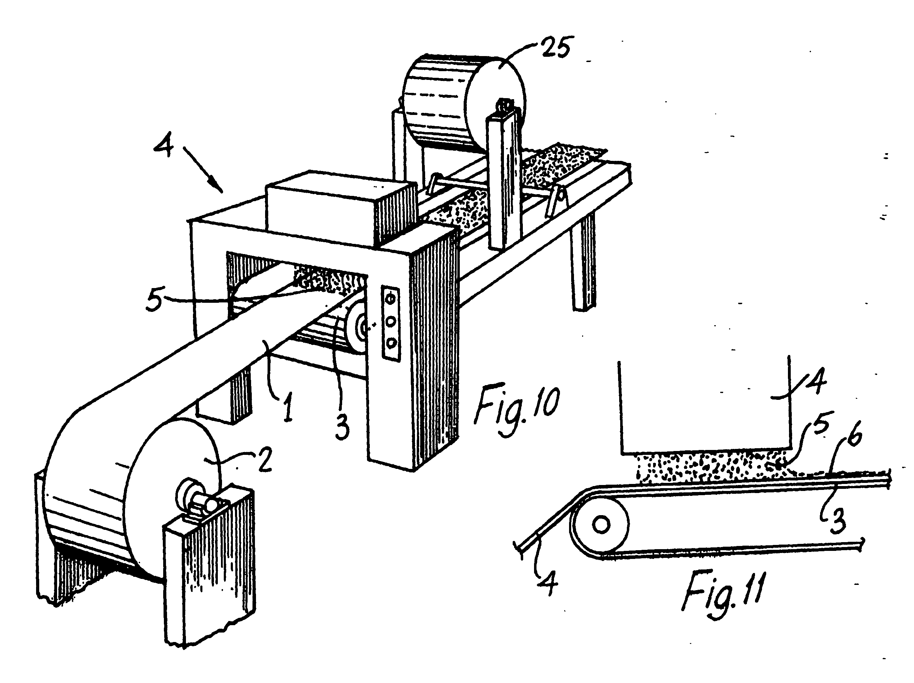

Alternatively or additionally, and referring particularly to Figs. 6 to 10 at a second substrate applying station 25, a substrate such as a fibre matt 26 may be applied over the first scattered layer either before or after heating. One or more further layers may be formed by scattering a dry blend material onto the second substrate 26 at a second applying station 28 upstream of the heating oven 12. In this way, any desired layer structure may be built up. An infra red heater 27 may be used to heat the first scattered layer and/or substrate in advance of oven heating and second scattering.

In one case, the scattered material forms, on heating, a saturation layer to receive a basecoat material. Alternatively or additionally, the material is scattered to form, on heating, a foamed basecoat layer.

The basecoat may be formed by scattering a foamable basecoat material onto the saturation layer of the substrate, and heating the dry blend to form a foamed basecoat layer.

Referring particularly to Figs. 6 to 10 the substrate may be defined by one of the heating belts 3, 11. In this case, a first material may be scattered onto the first belt 3, 21 at the first scattering station 4, a substrate 26 applied over the first coating and a second coating applied over the substrate 26 from the second scattering station 28. The substrate with the first and second scattered layers is then led under the second belt 10 and the layered product is heated to gel the coatings. For example, a backing layer may be formed on one face of the substrate and a saturation or basecoat layer on the other face of the substrate.

In another case, the second layer is a saturation layer and the method includes the steps of scattering a further coating over the saturation layer and heating the third coating to form a basecoat layer on the saturation layer.

The material that is scattered on the substrate may be in any suitable form such as powder, granules or pellets. A blended powder may be extruded to produce a fully fused compound which is then pelletised and in some cases pulverised. Such pellets have the advantage that they are more easy to control and are less adherent to the belts generally than powders. Thus, a more controlled scattering, higher processing speed and a more uniform, product may be achieved. Typically the pellets are from 0.5 to 2 mm diameter, preferably about 1 mm, and from 1 to 2 mm long, preferably, about 1.5 mm. The pulverised particles are generally in the 100 to 500 micron range.

Preferably the belts are at least coated with a release material such as a silicone-based material and/or Teflon or the like material.

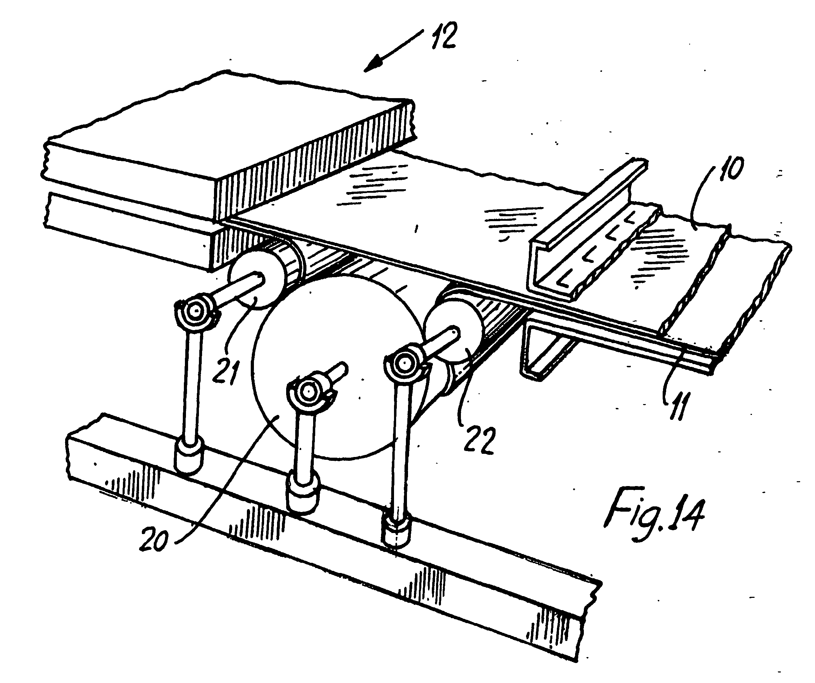

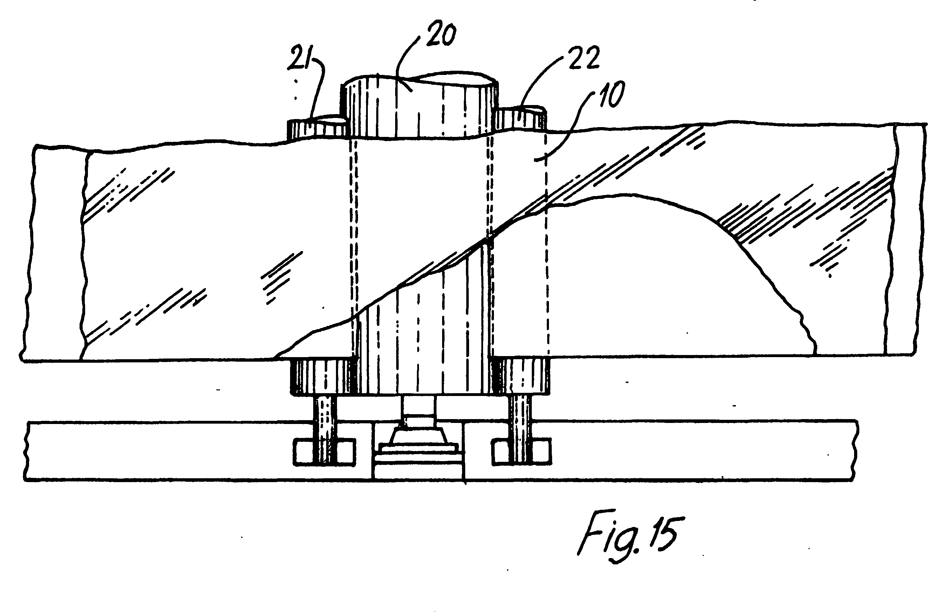

In an alternative or additional arrangement illustrated in Figs. 14 and 15 the gelled coating may be smoothed or further smoothed by leading the substrate supported on the lower belt 11 over a large diameter smoothing roller 20. To optimise the operation of the smoothing roller 20, the substrate is first led over an infeed roller 21 on the infeed side and is led over an outfeed roller 22 at the outfeed side of the smoothing roller 20.

The substrate may be heated or cooled by circulating a heating or cooling fluid through the smoothing roller 20. Similarly, a heating or cooling fluid may be circulated through the infeed and/or outfeed rollers 21, 22.

### Example 1

A glass fibre matt material having 50 g/m² of glass fibre material is used as the substrate.

A saturation layer forming dry blend of the following formulation was used. The dry blend may be in the form of a powder or in the form of granules or the like material.

| | |
|---|---|
| | Parts by Weight |
| Suspension Grade PVC | 100 |
| Di-2-Ethyl Hexyl Phthalate | 40-60 |
| Butyl Benzyl Phthalate | 10-30 |
| Calcium Carbonate Filler | 100-160 |
| Barium/Zinc Stabiliser | 2-3 |

At a first scattering station, an amount of typically 200 g/m² of the saturation dry blend is applied on a substrate belt. The glass fibre matt is then applied over the scattered material as described above and at a second scattering station an amount of typically 200 g/m² of the saturation dry blend is scattered on top of the fibre matt. We have found that by splitting the saturation material and applying it top and bottom as described, a matt with a high level of saturation and a smooth surface finish is achieved. Alternatively, an amount of 350 g/m² of the saturation dry blend may be applied to the top of the fibre matt at only one scattering station.

The substrate is then passed between heated belts at a temperature typically in the range of 180°C to 200°C at a residence time in heating of typically one minute.

The heated layered substrate is passed between nip rollers and then cooled by passing between a pair of cooling belts which are maintained at typical process water conditions. The residence time in cooling is typically one minute.

A glass fibre matt with a smooth surface top and bottom is formed in a highly cost efficient manner which may be processed further using conventional techniques or by passing through the same oven unit or another similar unit arranged in series.

### Example 2

A foamed basecoat material may be applied to a saturated substrate using the following basecoat dry blend formulation:

| | |
|---|---|
| | Parts by Weight |
| Suspension Grade PVC | 95-100 |
| Dispersion,Grade PVC | 0-5 |
| Di-2-Ethyl Hexyl Phthalate | 20-50 |
| Butyl Benzyl Phthalate | 20-50 |
| Calcium Carbonate Filler | 20-80 |
| Barium/Zinc Stabiliser | 1.5-3.5 |
| Blowing Agent Mixture | 2-4 |
| (Azodicarbonamide/Zinc Oxide) | |
| Titanium dioxide | 6-10 |

The foamable basecoat material is scattered onto the saturated substrate at a single scattering station at a rate of from 250-450 g/m² and further processed as described above in Example 1.

It will be appreciated that the method is applicable to producing non directional homogeneous floor covering materials.

It will also be appreciated that while the invention has been described particularly in relation to PVC material it may also be applied to any suitable thermoplastics materials which are substantially free of PVC.

Many variations on the specific embodiments of the invention described will be readily apparent and accordingly the invention is not limited to the embodiments hereinbefore described which may be varied in detail.

## Claims

1. A method for manufacturing a floor covering comprising the steps of:-
scattering powder, granules or pellets of a thermoplastic material onto a first substrate (1) to form a first coating;
leading the thus coated substrate between a pair of belts (10, 11) of a low pressure double belt press;
applying heal to gel the coating between the belts (10, 11);
smoothing the gelled coating between a pair of nipping rollers (15, 16) which define a gap therebetween to provide a layer of desired thickness; and
cooling the layer.

2. A method as claimed in claim 1, wherein the substrate is a fibre matt material (1), preferably a glass fibre matt material (1), preferably the fibre matt (1), has less than 100 g of glass fibre per m² of material, most preferably the fibre matt (1), has less than 65g of glass fibre per m² of material, preferably the fibre matt (1), has from 30 to 50 g of glass fibre per m² of material.

3. A method as claimed in claim 1 or 2 wherein the method includes the step of adjusting the gap between the nip rollers (15, 16).

4. A method as claimed in any preceding claim comprising the steps of:-
scattering powder, granules or pellets of thermoplastic material onto a first substrate (3) to form a first coating:
applying a second substrate (25) over the first coating;
scattering powder, granules or pellets of a thermoplastic material onto the second substrate (1) to form a second coating;
leading the coatings between a pair of belts (10, 11) of a low pressure double belt press;
applying heat to gel the coatings between the belts (10, 11);
amouthing the gelled coatings between a pair of nipping rollers (15, 16) which define a gap therebetween to provide a layered product of desired thickness: and
cooling the layered product.

5. A method as claimed in claim 4 wherein the first substrate is defined by a lower of the conveyor belts (11), preferably the second substrate (25) is a substrate as defined in claim 2.

6. A method as claimed in any of claims 4 or 5 wherein the second coating is of the same material as the first coating, alternatively the second coating is of a different material to the first coating.

7. A method as claimed in any of claims 4 to 6 wherein the first coating is of a saturation material to form, on heating, a saturation layer, preferably the second coating is of a basecoat material to form, on heating, a basecoat layer,

8. A method as claimed in any of claims 1 to 7 wherein the thermoplastic material is scattered to form, on heating, a saturation layer to receive a basecoat layer, alternatively the thermoplastic material is scauered to form on heating, a basecoat layer, in this case preferably the basecoat is formed by a method including the steps of:-
scattering a basccoat-forming material onto the saturation layer of the substrate (1);
leading the substrate (1) between a pair of belts (10, 11); and
applying heat to the belts (10, 11) to form a basecoat layer on the saturation layer.

9. A method as claimed in any preceding claim wherein a substrate is defined by one of the heating belts (11).

10. A method as claimed in any preceding claim including the steps of:-
scattering a first thermoplastic material onto a first belt (3, 11):
applying a substrate (26) over the thermoplastic material:
scattering a second thermoplastic material onto the substrate:
leading the substrate (26) with the first and second thermoplastic material under a second bell (10); and
applying heat to the belts (10, 11) to gel the thermoplastic material to form a backing layer on one face of the substrate and a saturation or basecoat layer on the other face of the substrate.

11. A method as claimed in claim 10 wherein the second layer is a saturation layer and the method includes the steps of:-
scattering a third thermoplastics material over the saturation layer:
leading the substrate (25) between a pair of belts; and
applying heat to the belts to gel the third thermoplastic material to form a basecoat layer on the saturation layer.

12. A method as claimed in any preceding claim including the step, after heating, of leading the substrate (1, 25) over a smoothing roller (20), prior to cooling, preferably the substrate is supported on one of the belts as it is led over the smoothing roller (20), preferably the method includes the step of heating and/or cooling the substrate as it is led over the smoothing roller (20), preferably the substrate is heated or coated by heating or cooling the smoothing roller (20), preferably the substrate is led over an infeed roller (21), to the smoothing roller (20), preferably the substrate is led over an outfeed roller (22), from the smoothing roller (20), preferably the substrate is heated or cooled as it is led over the infeed and/or outfeed rollers (21, 22).

13. A method as claimed in any preceding claim, wherein the substrate is cooled, after gelling, by leading the pair of belts (10, 11) through a cooling station (17).

14. A method as claimed in any preceding claim wherein the substrate (1. 26) is a mineral felt.

## Patentansprüche

1. Verfahren zum Herstellen einer Bodenabdeckung, das die folgenden Schritte umfasst:
Streuen von Pulver, Granulat oder Pellets eines thermoplastischen Materials auf einen ersten Träger (1) zum Bilden einer ersten Beschichtung;
Führen des somit beschichteten Trägers zwischen ein Paar von Bändern (10, 11) einer Niederdruck-Doppelbandpresse;
Anlegen von Wärme zum Gelieren der Beschichtung zwischen den Bändern (10, 11);
Glätten der gelierten Beschichtung zwischen einem Paar von Quetschwalzen (15, 16), die einen Spalt zwischen sich begrenzen, um eine Schicht gewünschter Dicke zu liefern; und
Abkühlen der Schicht.

2. Verfahren nach Anspruch 1, bei dem der Träger ein Fasermattenmaterial (1), vorzugsweise ein Glasfasermattenmaterial (1) ist, die Fasermatte (1) vorzugsweise weniger als 100 g Glasfaser pro m² des Materials aufweist, die Fasermatte (1) am stärksten bevorzugt weniger als 65g Glasfaser pro m² des Materials aufweist, und die Fasermatte (1) vorzugsweise von 30 bis 50 g Glasfaser pro m² des Materials aufweist.

3. Verfahren nach Anspruch 1 oder 2, bei dem das Verfahren den Schritt einschließt, den Spalt zwischen den Quetschwalzen (15, 16) anzupassen.

4. Verfahren nach einem vorhergehenden Anspruch, das die folgenden Schritte aufweist:
Streuen von Pulver, Granulat oder Pellets aus thermoplastischem Material auf einen ersten Träger (3) zum Bilden einer ersten Beschichtung;
Aufbringen eines zweiten Trägers (25) über der ersten Beschichtung;
Streuen von Pulver, Granulat oder Pellets aus einem thermoplastischen Material auf den zweiten Träger (1) zum Bilden einer zweiten Beschichtung;
Führen der Beschichtungen zwischen ein Paar von Bändern (10, 11) einer Niederdruck-Doppelbandpresse;
Anlegen von Wärme zum Gelieren der Beschichtungen zwischen den Bändern (10, 11);
Glätten der gelierten Beschichtungen zwischen einem Paar Quetschwalzen (15, 16), die einen Spalt zwischen sich begrenzen, um ein geschichtetes Produkt gewünschter Dicke bereitzustellen; und
Abkühlen des geschichteten Produkts.

5. Verfahren nach Anspruch 4, bei dem der erste Träger durch ein unteres der Förderbänder (11) gebildet wird, und der zweite Träger (25) vorzugsweise ein wie in Anspruch 2 definierter Träger ist.

6. Verfahren nach einem der Ansprüche 4 oder 5, bei dem die zweite Beschichtung aus dem gleichen Material wie die erste Beschichtung besteht, und alternativ die zweite Beschichtung aus einem anderen Material als die erste Beschichtung besteht.

7. Verfahren nach einem der Ansprüche 4 bis 6, bei dem die erste Beschichtung aus einem Sättigungsmaterial besteht, um bei Erhitzung eine Sättigungsschicht zu bilden, wobei die zweite Beschichtung vorzugsweise aus einem Grundschichtmaterial besteht, um bei Erhitzung eine Grundschicht zu bilden.

8. Verfahren nach einem der Ansprüche 1 bis 7, bei dem das thermoplastische Material verstreut wird, um bei Erhitzung eine Sättigungsschicht zum Aufnehmen einer Grundschicht zu bilden, wobei das thermoplastische Material alternativ verstreut wird, um bei Erhitzung eine Grundschicht zu bilden, und in diesem Fall vorzugsweise eine Grundschicht durch ein Verfahren gebildet wird, das die folgenden Schritt aufweist:
Streuen eines grundschichtbildenden Materials auf die Sättigungsschicht des Trägers (1);
Führen des Trägers (1) zwischen ein Paar von Bändern (10, 11); und
Anlegen von Wärme an die Bänder (10, 11), um eine Grundschicht auf der Sättigungsschicht zu bilden.

9. Verfahren nach einem vorhergehenden Anspruch, bei dem ein Träger durch eines der Heizbänder (11) gebildet wird.

10. Verfahren nach einem vorhergehenden Anspruch, das die folgenden Schritte aufweist:
Streuen eines ersten thermoplastischen Materials auf ein erstes Band (3, 11);
Aufbringen eines Trägers (26) über dem thermoplastischen Material;
Streuen eines zweiten thermoplastischen Materials auf den Träger;
Führen des Trägers (26) mit dem ersten und zweiten thermoplastischen Material unter ein zweites Band (10); und
Anlegen von Wärme an die Bänder (10, 11) zum Gelieren des thermoplastischen Materials, um eine Trägerschicht auf einer Fläche des Trägers und eine Sättigungs- oder Grundschicht auf der anderen Fläche des Trägers zu bilden.

11. Verfahren nach Anspruch 10, bei dem die zweite Schicht eine Sättigungsschicht ist und das Verfahren die folgenden Schritt einschließt:
Streuen eines dritten thermoplastischen Material über die Sättigungsschicht;
Führen des Trägers (25) zwischen ein Paar von Bändern; und
Anlegen von Wärme an die Bänder zum Gelieren des dritten thermoplastischen Materials, um eine Grundschicht auf der Sättigungsschicht zu bilden.

12. Verfahren nach einem vorhergehenden Anspruch, das den Schritt einschließt, nach Erhitzen den Träger (1, 25) über eine Glättungswalze (20) vor Abkühlen zu führen, wobei der Träger vorzugsweise auf einem der Bänder gehalten wird, während er über die Glättungswalze (20) geführt wird, das Verfahren vorzugsweise den Schritt zum Erhitzen und/oder Abkühlen des Trägers einschließt, wenn er über die Glättungswalze (20) geführt wird, der Träger vorzugsweise durch Erhitzen oder Kühlen der Glättungswalze (20) erhitzt oder gekühlt wird, der Träger vorzugsweise über eine Eingabewalze (21) zu der Glättungswalze (20) geführt wird, der Träger vorzugsweise über eine Ausgabewalze (22) von der Glättungswalze (20) geführt wird, und der Träger vorzugsweise erhitzt oder gekühlt wird, während er über die Eingabe- und/oder Ausgabewalze (21, 22) geführt wird.

13. Verfahren nach einem vorhergehenden Anspruch, bei dem der Träger nach Gelieren gekühlt wird, indem das Paar von Bändern (10, 11) durch eine Kühlstation (17) geführt wird.

14. Verfahren nach einem vorhergehenden Anspruch, bei dem der Träger (1, 26) ein Mineralfilz ist.

## Revendications

1. Procédé de fabrication d'un revêtement de sol comportant les étapes consistant à:
disperser de la poudre, des granules ou des pastilles d'un matériau thermoplastique sur un premier substrat (1) afin de former un premier enduit ;
faire avancer le substrat ainsi enduit entre une paire de courroies (10, 11) d'une presse à basse pression à deux courroies ;
appliquer de la chaleur afin de gélifier l'enduit entre les courroies (10, 11);
lisser l'enduit gélifié entre une paire de rouleaux pinceurs (15, 16) qui définissent un espace entre eux afin de mettre en oeuvre une couche de l'épaisseur souhaitée ; et
refroidir la couche.

2. Procédé selon la revendication 1, dans lequel le substrat est un matériau de type matelas de fibres (1), de préférence un matériau de type matelas de fibres de verre (1), de préférence le matelas de fibres (1) a moins de 100 g de fibres de verre par m² de matériau, avant tout de préférence le matelas de fibres (1) a moins de 65 g de fibres de verre par m² de matériau, de préférence le matelas de fibres (1) a de 30 à 50 g de fibres de verre par m² de matériau.

3. Procédé selon la revendication 1 ou la revendication 2, dans lequel le procédé comprend l'étape consistant à ajuster l'espace entre les rouleaux pinceurs (15, 16).

4. Procédé selon l'une quelconque des revendications précédentes, comportant les étapes consistant à :
disperser de la poudre, des granules ou des pastilles de matériau thermoplastique sur un premier substrat (3) afin de former un premier enduit ;
appliquer un deuxième substrat (25) sur le premier enduit ;
disperser de la poudre, des granules ou des pastilles d'un matériau thermoplastique sur le deuxième substrat (1) afin de former un deuxième enduit ;
faire avancer les enduits entre une paire de courroies (10, 11) d'une presse à basse pression à deux courroies ;
appliquer de la chaleur afin de gélifier les enduits entre les courroies (10, 11) ;
lisser les enduits gélifiés entre une paire de rouleaux pinceurs (15, 16) qui définissent un espace entre eux afin de mettre en oeuvre un produit multicouche de l'épaisseur souhaitée ; et
refroidir le produit multicouche.

5. Procédé selon la revendication 4, dans lequel le premier substrat est défini par une courroie inférieure des courroies transporteuses (11), de préférence le deuxième substrat (25) est un substrat tel qu'il est défini par la revendication 2.

6. Procédé selon l'une quelconque des revendications 4 ou 5, dans lequel le deuxième enduit est du même matériau que celui du premier enduit, comme autre possibilité, le deuxième enduit est d'un matériau différent de celui du premier enduit.

7. Procédé selon l'une quelconque des revendications 4 à 6, dans lequel le premier enduit est d'un matériau de saturation afin de former, sous l'effet de la chaleur, une couche de saturation, de préférence le deuxième enduit est d'un matériau de couche primaire afin de former, sous l'effet de la chaleur, une couche primaire.

8. Procédé selon l'une quelconque des revendications 1 à 7, dans lequel le matériau thermoplastique est dispersé afin de former, sous l'effet de la chaleur, une couche de saturation destinée à recevoir une couche primaire, comme autre possibilité, le matériau thermoplastique est dispersé afin de former, sous l'effet de la chaleur, une couche primaire, dans ce cas de préférence la couche primaire est formée par un procédé comprenant les étapes consistant à :
disperser un matériau formant une couche primaire sur la couche de saturation du substrat (1) ;
faire avancer le substrat (1) entre une paire de courroies (10, 11) ; et
appliquer de la chaleur sur les courroies (10, 11) afin de former une couche primaire sur la couche de saturation.

9. Procédé selon l'une quelconque des revendications précédentes, dans lequel un substrat est défini par une des courroies chauffantes (11).

10. Procédé selon l'une quelconque des revendications précédentes, comprenant les étapes consistant à :
disperser un premier matériau thermoplastique sur une première courroie (3, 11);
appliquer un substrat (26) sur le matériau thermoplastique ;
disperser un deuxième matériau thermoplastique sur le substrat ;
faire avancer le substrat (26) ayant le premier matériau thermoplastique ainsi que le deuxième matériau thermoplastique sous une deuxième courroie (10) ; et
appliquer de la chaleur sur les courroies (10, 11) afin de gélifier le matériau thermoplastique afin de former une couche de fond sur une surface du substrat et une couche de saturation ou primaire sur l'autre surface du substrat.

11. Procédé selon la revendication 10, dans lequel la deuxième couche est une couche de saturation et le procédé comprend les étapes consistant à :
disperser un troisième matériau thermoplastique sur la couche de saturation ;
faire avancer le substrat (25) entre une paire de courroies ; et
appliquer de la chaleur sur les courroies afin de gélifier le troisième matériau thermoplastique afin de former une couche primaire sur la couche de saturation:

12. Procédé selon l'une quelconque des revendications précédentes, comprenant l'étape, après le chauffage, consistant à faire avancer le substrat (1, 25) sur un rouleau à lisser (20), avant le refroidissement, de préférence le substrat est supporté sur l'une des courroies au fur et à mesure qu'on le fait avancer sur le rouleau à lisser (20), de préférence le procédé comprend l'étape consistant à chauffer et/ou à refroidir le substrat au fur et à mesure qu'on le fait avancer sur le rouleau à lisser (20), de préférence le substrat est chauffé ou refroidi par le chauffage ou le refroidissement du rouleau à lisser (20), de préférence on fait avancer le substrat sur un rouleau d'introduction (21), jusqu'au rouleau à lisser (20), de préférence on fait avancer le substrat sur un rouleau de sortie (22), en provenance du rouleau à lisser (20), de préférence le substrat est chauffé ou refroidi au fur et à mesure qu'on le fait avancer sur les rouleaux d'introduction et/ou de sortie (21, 22).

13. Procédé selon l'une quelconque des revendications précédentes, dans lequel le substrat est refroidi, après avoir été gélifié, en faisant avancer la paire de courroies (10, 11) à travers un poste de refroidissement (17).

14. Procédé selon l'une quelconque des revendications précédentes, dans lequel le substrat (1, 26) est un feutre minéral.
